# EUROPEAN PATENT SPECIFICATION

(11) **EP 0 946 287 B1**
(45) Date of publication and mention of the grant of the patent: **18.08.2004**
(21) Application number: 97950198.8
(22) Date of filing: 17.11.1997
(51) Int. Cl.: B01J 19/00

(54) **DEVICE FOR POLYMERS SYNTHESIS**
VORRICHTUNG ZUR POLYMERSYNTHESE
DISPOSITIF DE SYNTHESE DE POLYMERES

(30) Priority: 18.11.1996 EP 96810806
(43) Date of publication of application: 06.10.1999
(73) Proprietor: Novartis AG, 4056 Basel (CH); Novartis Pharma GmbH, 1230 Wien (AT)
(72) Inventor: HALL, Jonathan, CH-4153 Reinach (CH); HASSLER, Martin, CH-4052 Basel (CH); HÜSKEN, Dieter, D-79102 Freiburg im Breisgau (DE)
(74) Representative: Grubb, Philip William
(86) International application number: PCT/EP1997/006407
(87) International publication number: WO 1998/022211

(56) References cited:
- EP-A- 0 514 927
- WO-A-95/11748
- WO-A-95/33846
- SOUTHERN E M ET AL: "ARRAYS OF COMPLEMENTARY OLIGONUCLEOTIDES FOR ANALYSING THE HYBRIDISATION BEHAVIOUR OF NUCLEIC ACIDS" NUCLEIC ACIDS RESEARCH, vol. 22, no. 8, 25 April 1994, pages 1368-1373, XP000601417 cited in the application

## Description

The invention relates to a device especially for synthesizing biopolymers such as oligonucleotides on a support material which is suitable for chemical synthesis and lies on a back plate, using at least one reaction cell assigned to the support material, which reaction cell has, on the side facing the support material, an orifice which can be repeatedly sealed against the support material along a preset sweep track, and which can be lifted off again, to generate a two-dimensional array of individual cells and which can be filled with the chemical substances required for the synthesis and emptied again via channels running through the body of the reaction cell, said channels for filling and emptying the reaction cell each open into the upper and lower round corner of the edge strip of the vertically oriented reaction cell and having the rest of technical features disclosed in the wording of independent claim 1.

A device of this type is disclosed by Nucleic Acids Research, 1994, Vol. 22. No. 8, pages 1368 - 1373, Southern et al. "Arrays of complementary oligonucleotides for analysing the hybridization behaviour of nucleic acids" and by WO,A,95 117 48. Using the reaction cell square in plan view and open on one side, in WO,A,95 117 48, a multiplicity of different straight-edged cells of different biopolymer strands is produced by overlapping the synthesis regions with a lateral shift of the support material. The support material which can be unwound from a roll is moved stepwise in this case along the upper side of a back plate, which extends horizontally like a bench surface. The flat reaction chamber of the reaction cells likewise extends horizontally in this case. EP-A-0514927 discloses a method an apparatus for rapid nucleic acid sequencing.

If chemicals or gas bubbles are not completely removed when a cell is emptied, there is the risk of the following reaction steps being adversely affected and the quality and uniformity of the synthesis being impaired. Complete exchange is of importance, since biopolymers and,in particular oligonucleotides, are covalently bound to the support material and it is difficult to monitor the quality and subsequent uniformity of the synthesis. In order to ensure, when the contents of the reaction cell are being changed, that the gas previously situated in the reaction cell or the liquid enclosed there has been completely removed, long flushing and filling times are necessary owing to the unfavourable horizontal flow conditions. This means that valuable reagents and valuable time are lost.

Starting from the above-described prior art, the object underlying the invention is to provide a device of the type mentioned at the outset for synthesizing biopolymers, which device, with high quality and uniformity of the synthesis, successfully employs shorter pumping times and lower amounts of the liquids and gases required in the synthesis.

This object is achieved according to the invention by the support material being detachably attached so as not to be able to slide as a cut-to-size sheet on the back plate, with the back plate, the support material and the assigned orifice of the reaction cell essentially extending along the vertical plane running in the direction of gravity, with the back plate together with the support material being movable stepwise within the vertical plane to generate the intended sweep track and by the directions of motion of the reaction cells for being placed on the support material and for being lifted off the support material lying in a plane which essentially extends horizontally.

In the invention, the vertically oriented back plate is movable under programmed control in a vertical direction with presettable step widths.

To ensure good sealing between the the reaction cells and a deformable support material, it is advantageous to provide an elastic layer, for example a rubber mat or rubber film, between the back plate, which consists of a hard material, and the support material suitable for the chemical synthesis. Support materials which have a good utility are a number of plastic plates or plastic films, in particular made of polypropylene, which are suitable for the synthesis. Instead of a deformable plastic film, a glass plate can also be used.

It is advantageous if a plurality of reaction cells are arranged on a shared carrier bar, in order to be able to carry out a plurality of syntheses in parallel. The carrier bar in this case extends transversely to the direction in which the back plate is movable. In order to avoid an overload or leaks on the support material, the reaction cells can preferably be pressed against the support material against the force of a pressure spring. The reaction cells, square in plan view, are, in a preferred working example, arranged in such a manner that the vertical diagonals of each cell are run in parallel. In this manner, the side walls of the flat compartment form funnels which extend symmetrically upwards and downwards. instead of a square reaction cell, a hexagonal-plan reaction cell can also be provided in which each two adjacent walls form a funnel for the inlet channel or the outlet channel of the reaction cell.

The bottom of the reaction cells is formed by the planar upper side of a block-like body, for example made of Teflon, on which there is a surrounding edge strip to form the side walls of the reaction cell. The course of the edge strip here corresponds to a square with comers which may be rounded.

The surrounding edge strip, in a preferred working example of the invention, is made trapezoidal in cross-section, the inner leg running at right angles to the plane of the reaction cell and the shorter base line being assigned to the contact surface of the reaction cell. The channels for filling and emptying the reaction cell each open out in the immediate vicinity of the upper and lower rounded comer of the edge strip of the vertically oriented reaction cell.

The vertical arrangement and special design of the flat reaction cells achieves good flow, which leads to a rapid, bubble-free or droplet-free exchange of the liquids or gases in the reacion cells.

In a further preferred embodiment, a device according to the invention includes means for marking the respective horizontal position of the reaction cell on the support material. On the basis of a marking of this type, the exact position of each biopolymer sequence on the support material can be determined. Advantageously, marking means of this type are mounted on said carrier bar, for example in the form of one or more needles or pins which are able to mark the support material physically. If the support material is a plastic film, such a needle is able to punch a hole into the support material. With the position of this hole as a reference, the respective position of the synthesized biopolymers can be inferred, by the hole being, for example, localized directly visually or by placing a support treated with a radioactive material beneath the plastic film and then detecting radiation given off through the hole.

The present invention also provides a process for preparing a support material having an array of biopolymers on its surface, which comprises synthesizing the biopolymers on the support material by means of a device according to the invention including the preferred embodiments and their combinations. As mentioned herein, such biopolymers preferably are oligonucleotides. In the course of the process, a reaction cell is repeatedly displaced, in each case by one step width vertically so as to overlap along a track extending from the vicinity of the upper edge of the back plate to the vicinity of the lower edge of the back plate, forced against the support material so as to seal well, with a particular component of the respective biopolymer being linked each time either to the surface of the support material or, if, at the respective point of the support material, a component or a chain of components is already present bound to the surface, is terminally linked to precisely this component or precisely this chain of components. In this manner, a desired array of biopolymers is produced on the support material. The step width is dependent on the dimensions of the reaction cell on the one hand and the desired chain length of the biopolymer (for example number of nucleoside components of an oligonucleotide) on the other. A procedure of this type is familiar to those skilled in the art, for example from the publication by Southern et al. mentioned at the outset and from WO-A-95 117 48, the entirety of these two publications being hereby incorporated by reference.

In the context of the present invention, including the respective preferred embodiments, the biopolymers are preferably oligonucleotides.

A working example of the invention is described below in more detail with reference to the drawing. In the figures:
- Fig. 1: shows a device for synthesizing biopolymers according to the invention in a diagrammatic perspective view,
- Fig. 2: shows the lifting unit of the device diagrammatically in an enlarged perspective view,
- Fig. 3: shows the lifting unit of Fig. 2 in a plan view,
- Fig. 4: shows a cross-section through the carrier bar of the lifting unit having a reaction cell, in a side view, partially cut away, attached to the carrier bar,
- Fig. 5: shows a plan view of a reaction cell,
- Fig. 6: shows an enlarged plan view of the upper region of the reaction cell,
- Fig. 7: shows a cross-section through the body of a reaction cell in the region of a borehole for filling and emptying,
- Fig. 8: shows the carrier bar of the lifting unit having boreholes for attaching reaction cells and having additional boreholes for attaching marking means in a plan view,
- Fig. 9: shows a cross-section through the carrier bar of the lifting unit at the position of a borehole for attaching reaction cells,
- Fig. 10: shows a cross-section through the carrier bar of the lifting unit at the position of a borehole for attaching a marking means,
- Fig. 11: shows a cross-section through a part of the carrier bar of the lifting unit having a knurled screw, a plate as attachment means for a marking means, a needle as marking means, a spring and a stop attached to the needle, and having a borehole for attaching a reaction cell,
- Fig. 12: shows a cross-section through an attachment plate for the marking means,
- Fig. 13: shows an attachment plate for the marking means in a plan view.

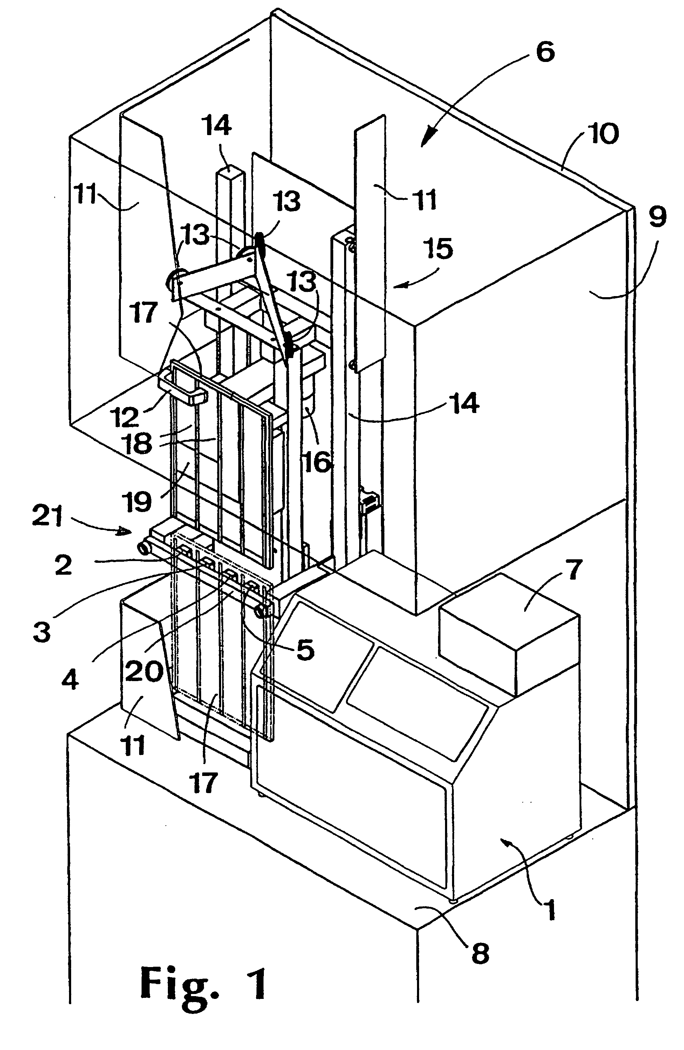

The device shown partly diagrammatically and in perspective in Fig. 1 serves for synthesizing oligonucleotides or other biopolymers using a synthesizer 1, as marketed, for example, by the Perkin Elmer Corporation, Foster City, California, under the name "DNA Synthesizer ABI 394-8". The synthesizer 1 is delivered by the manufacturer in an original state which permits four reaction columns packed with granular support material to be automatically supplied under programme control with reagents, wash liquids and flushing gases. In the case of the device shown in Fig. 1, the reaction columns of the synthesizer which were originally provided have been removed from their tube connections and replaced by four reaction cells 2, 3, 4, 5 which are open on one side and are connected to the synthesizer 1 via tube connections which are not shown in Fig. 1.
The device shown in Fig. 1, in addition to the synthesizer 1, comprises an automatic cell positioner 6 for the reaction cells 2, 3, 4, 5. The automatic cell positioner 6 is connected, via electrical leads not shown in the drawing, to an electronic control unit 7, which itself is connected, via a trigger lead not shown in the drawing, to a trigger output of the synthesizer 1, which can trigger a trigger signal (advance fraction collector signal) for each following cell position of the automatic cell positioner 6. The housing of the electronic control system 7 is, in the working example shown in Fig. 1, mounted directly on the housing of the synthesizer 1.

The synthesizer 1 and the automatic cell positioner 6 are immediately adjacent on a planar and sufficiency stable support 8, for example on the bench top of a stable bench.

As is seen in Fig. 1, a fixed cover hood 9 is assigned to the automatic cell positioner 6, which cover hood is attached to a rear wall 10. In addition, a protective hood 11 is provided, which is shown incompletely in Fig. 1 and which, using a handle 12, can be moved both into the upper position indicated and into the lower position likewise indicated in the region of the support 8. To compensate for the weight of the protective hood 11, a counterweight, which is not shown in the drawing, is provided, which is connected to the protective hood 11 via traction cables which are not shown. The traction cables are deflected using rollers 13. The rollers 13 are connected via stays and struts to the sectioned frame 15 which consists of a plurality of sectioned tubes 14 and is mounted on the support 8.

The automatic cell positioner 6 has an electrically driven linear unit 16, by means of which a back plate 17 can be moved stepwise vertically, under programmed control via the controller 7 between an upper position and a lower position shown dot-dashed in Fig. 1.

Sensors which are connected to the controller 7, and are not shown in the drawing, are assigned to the back plate 17, which sensors detect, for example, the final film change position shown in continuous lines in the drawing.

On the back plate 17 there is rapidly and simply detachably attached a glass sheet or, alternatively, a plastic film 19 cut to size as sheet or slab, made of a support material suitable for a chemical synthesis. A support material of this type is surface-hydroxylated polypropylene, for example, treated in the manner described by K.W. Lee and T.J. McCarthy in Macromolecules 1988, Volume 21, pages 309 - 313. In brief, a precut foil of polypropylene (PP: Mobil 40MB400, 400 mm x 300 mm) is immersed in a specially constructed circular glass drum (diameter 170 mm, length 400 mm) containing a solution (180 mL) of chromium (VI) oxide (Fluka) dissolved in a 1:1 mixture of acetic anhydride/acetic acid (Fluka). The reaction drum is rotated rapidly with the aid of a mechanical roller for 1h. The foil is removed and immersed in a bath of 1M aqueous acetic acid for 30 mins and then rinsed in methanol (Fluka) for 30 mins. The foil is dried under high vacuum between two glass plates for protection. It is then immersed in the same glass vessel containing a tetrahydrofuran solution (180 mL) of BH₃ (1.0 M) (Aldrich Chemical Co.), diluted to 0.2 M. The vessel is rapidly rotated for 1 h. The foil is removed, immersed in 1 M aqueous acetic acid, rinsed in methanol and dried under vacuum.

A frame which can be seen in the drawing and, if appropriate, has a plurality of vertically running holder strips 18 is provided for attachment. The holder strips 18 can be detached and attached using knurled screws and serve to hold down the plastic film 19 or glass plate to be retained on the back plate 17.

When the back plate is moved vertically using the linear unit 16, the reaction cells 2, 3, 4, 5 which are open on one side move relative to the back plate 17 in paths parallel to the holder strips 18.

The reaction cells 2, 3, 4, 5 are detachably attached horizontally adjacently on a carrier bar 20 of a lifting unit 21. Using the lifting unit 21 which is controllable via the electronic control system 7, it is possible to move the carrier bar together with the reaction cells 2, 3, 4, 5 in the direction towards the back plate 17 shown dot-dashed in its lower position, until the reaction cells 2, 3, 4, 5 are forced against the plastic film 19 or glass plate. The lifting unit 21 permits the reaction cells 2, 3, 4, 5, after they have been placed on the plastic film 19, and the required synthesis steps have been carried out under programme control by the controller 7, to be lifted off again from the plastic film 19, so that the back plate 17 can be moved vertically upwards by a predetermined step using the linear unit 16, before the lifting unit again places the carrier bar 20 and the reaction cells 2, 3, 4, 5 connected thereto onto the plastic film 19 or glass plate for the subsequent synthesis steps by the synthesizer 1.

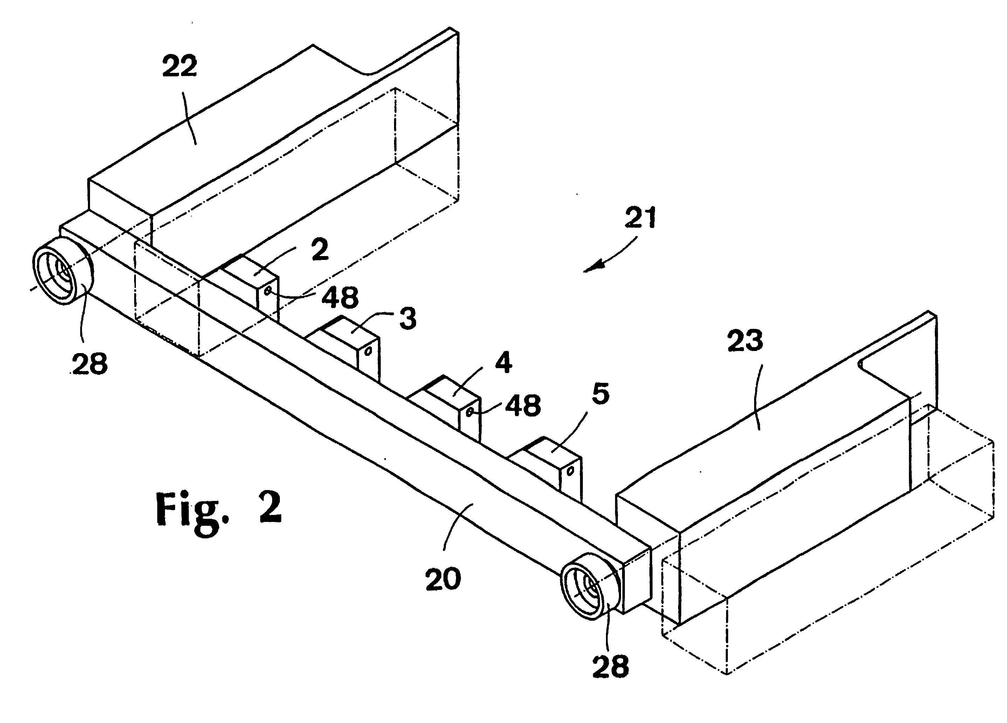

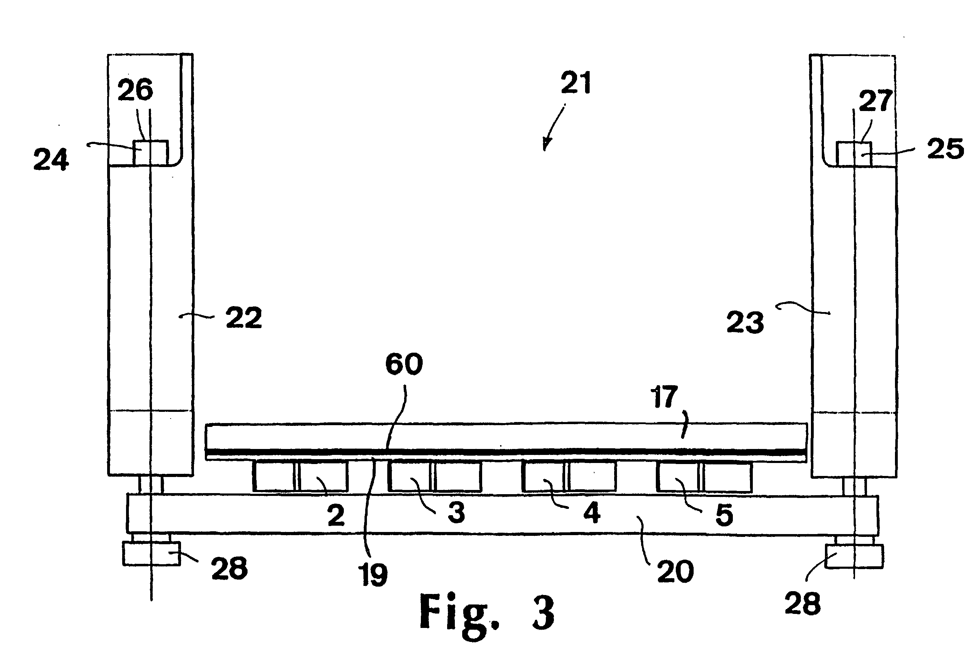

The lifting unit 21 is shown separately and in enlargement in Fig. 2. Fig. 3 shows the lifting unit in plan view together with the reaction cells 2, 3, 4, 5 and the back plate 17. The lifting unit 21 has a left guide 22 and a right guide 23. Through each of the guides 22 and 23 there extends respectively a left push rod 24 and a right push rod 25. The two push rods 24, 25 are pretensioned in such a way, using pressure springs which are not shown in the drawing and are arranged in the guides 22, 23, that the reaction cells 2, 3, 4, 5 are pushed onto the back plate 17. To lift the reaction cells 2, 3, 4, 5 away from the back plate 17, eccentric discs, which are not shown in the drawing, are provided, which interact with the end faces 26 and 27 of the push rods 24, 25 in order to move the carrier bar 20 and thus the reaction cells 2, 3, 4, 5 away from the back plate 17. The eccentric discs are shifted using an electrical drive which is likewise connected to the electronic control system 7.

The push rods 23, 24 are detachably connected to the carrier bar 20 using knurled nuts 28. In this manner the reaction cells 2, 3, 4, 5 can be demounted together with the carrier bar 20. After demounting the carrier bar 20 it is possible to detach each individual reaction cell 2, 3, 4, 5 from the carrier bar 20 and, if desired, to replace each by another reaction cell 2, 3, 4, 5.

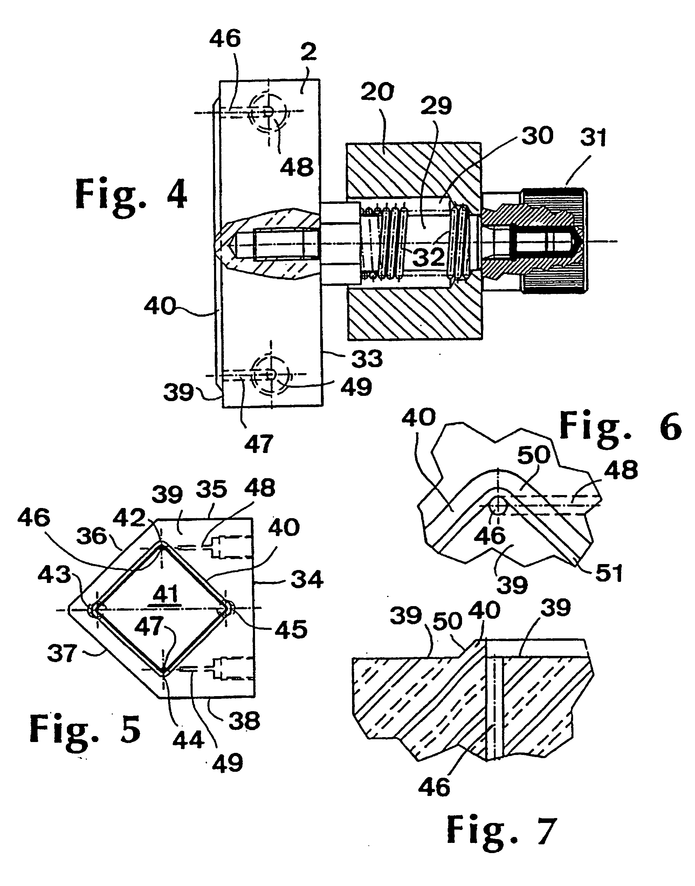

The connection to the reaction cell 2 is shown by way of example in Fig. 4. The reaction cell 2 is attached to a spigot 29 which extends through a borehole 30 in the carrier bar 20. On the side of the carrier bar 20 facing away from the reaction cell 2, the spigot 29 is furnished with a thread onto which a knurled nut 31 is screwed. The spigot 29 together with the screwed-on knurled nut 31 is pretensioned using a pressure spring 32, so that the knurled nut 31 is forced against the rear of the carrier bar 20. The pressure spring 32 is designed to be considerably weaker than the pressure springs provided in the guides 22, 23, so that when the reaction cells 2, 3, 4, 5 are placed on the plastic film 19 or glass plate and the back plate 17, the pressure spring 32 is compressed and establishes the pressing force of the reaction cells 2, 3, 4, 5. The optimum pressing force can be rapidly and simply set here by exchanging the pressure spring 32. In addition, the pressure spring 32 ensures uniform pressing of the reaction cells 2, 3, 4, 5 against the plastic film 19, which is fixed either directly on the back plate 17 or with intermediate insertion of an intermediate support film 60 made of an elastic material using the holding strips 18 on the back plate 17. The intermediate support film 60, which is preferably up to 1 mm in thickness, consists, for example, of a polymer film of neoprene 60° Shore A or natural rubber (for example pararubber 40° Shore A), both of which are marketed by Richterich + Zeller AG, Basle, Switzerland.

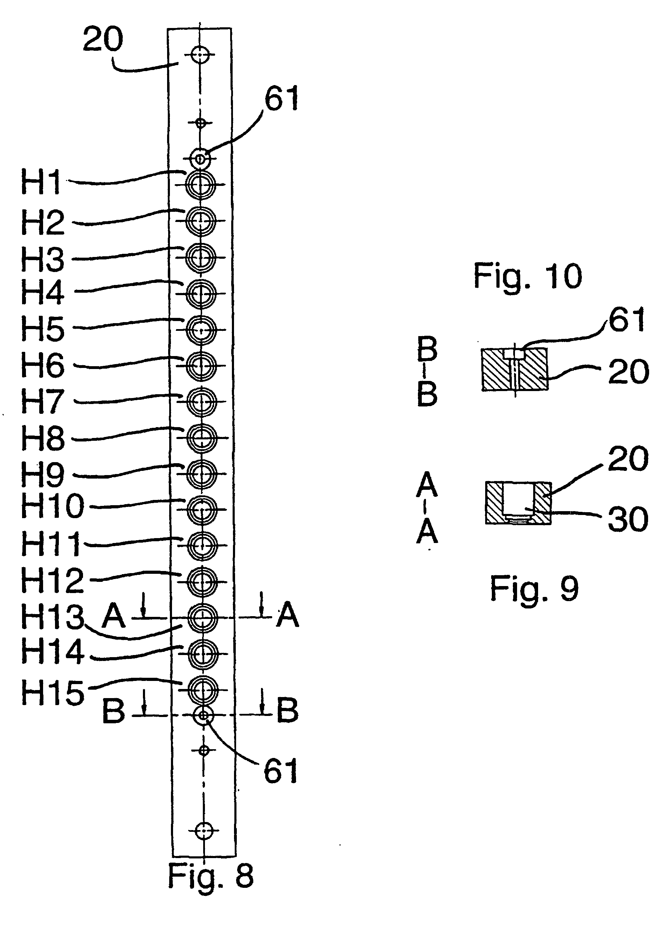

Figures 8 to 13 show a detailed view of a preferred embodiment of the bar 20 shown in Figure 2. The carrier bar 20 carries fifteen boreholes (30), i.e. designated H1 to H15 (Figs. 8 and 9). This allows multiple, identically-sized parallel arrays of biopolymers to be synthesized on a single sheet of polypropylene, without moving the polypropylene sheet 19 away from the back plate 17. One possible method is to fit four reaction cells 2,3,4,5 to the bar 20 using boreholes (30) H1 + H3, H5 + H7, H9 + H11, H13 + H15, respectively. For example, using such a bar, four arrays are thus synthesized simultaneously. The bar 20 is then removed from the apparatus by unscrewing nuts 28. The cells 2,3,4,5 are removed from the bar 20. Three cells 2,3,4 are then fitted to bar 20 using boreholes (30) H3 + H5, H7 + H9, H11 + H13, respectively. The bar 20 is re-fitted to the apparatus and three further arrays are synthesized simultaneously in the areas between the four arrays already on the polypropylene sheet 19. This is advantagous because all seven arrays are positioned exactly at the same horizontal level.

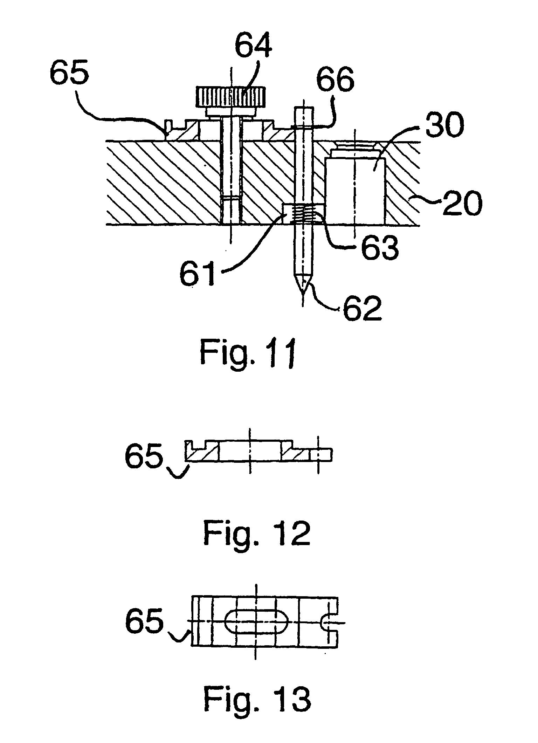

According to Figs. 8 and 10, the bar 20 also carries two additional boreholes 61. Fitted in each of these is a needle 62 on a spring 63 (see Fig. 11), which needle is held in place by way of a plate 65 and a stop means 66 fixed on the needle. Each time that the bar 20 moves horizontally to seal reaction cells 2,3,4,5 against the surface of the polypropylene sheet 19, the two needles punch a small hole in the polypropylene sheet 19. The size of the hole is approximately 100 microns. The centre of the hole is at the same horizontal level as the centre point of the cells 2,3,4,5. This hole serves to reference the exact position of the reaction cells 2,3,4,5 for every synthetic coupling step. The hole can be visually seen, or it can be detected by placing a piece of paper coated with a radioactive compound such as C-14 acetate salt underneath the polypropylene sheet 19, directly below the hole, and then detecting radioactive decay through the hole. When it is not desired to punch a hole in the sheet 19, the needles 62 can be retracted into the bar 20 through the hole 61 with the aid of the screw 64, the plate 65 and the stop 66 (see Figs. 12 and 13).

The structure of the reaction cells 2, 3, 4, 5 which are open on one side is described in more detail below with reference to Figs. 4 to 7.

As can be seen from Figs. 4 and 5, the reaction cells 2, 3, 4, 5 consist of a block of a mouldable material which is rectangular in cross-section and roughly spearhead shaped in plan view. The material used can either be a plastic, such as PVDF, PTFE or a metal, such as steel. The rear side 33 facing the carrier bar 20 and the outsides 34, 35, 36, 37 and 38 are all planar. A surrounding edge strip 40 is provided on the upper side 39 facing away from the carrier bar 20, which edge strip encloses a flat space 41. The height of this flat space 41 and the height of the edge strip 40 are, for example, about one millimetre. The four edge strip sections describing a square are each about 25 millimetres long. In the area of the comers 42, 43, 44 and 45, the edge strip sections are curved, the inner radius being, for example, 0.5 millimetres.
Boreholes 46 and 47 which run perpendicularly to the upper side 39 are situated in the area of the comers 42 and 44, which boreholes, in the working example shown, likewise have a radius of 0.5 millimetres. The borehole 46 opens into an outlet channel 48. The lower borehole 47 opens into an inlet channel 49. Each inlet channel 49 and each outlet channel 48 of the reaction cells 2, 3, 4, 5 is connected to the synthesizer 1 by a tube connection which is not shown in the drawing.

Fig. 6 shows an enlarged detail of a reaction cell 2 in the area of the borehole 46, which is connected to the outlet channel 48. Fig. 6 also shows the outward facing inclined side 50 of the edge strip 40 and the narrow contact surface 51 of the reaction cell 2 provided for contacting the plastic film 19.

For clarification, Fig. 7 shows a cross-section through the edge strip 40 in the area of the borehole 46. As can be seen in Fig. 7, the edge strip 40 is trapezoidal in cross-section, the inner side of the trapezium running perpendicularly to the upper side 39.

The above-described device is operated under the control of the synthesizer 1 and the electronic control system 7. During operation, the reaction cells 2, 3, 4, 5 are repeatedly pushed against the plastic film 19 or glass plate or plastic plate so as to seal well, each time slightly vertically displaced by one step width, along a track extending from the vicinity of the upper edge of the back plate 17 to the vicinity of the lower edge of the back plate 17. The reaction cells 2, 3, 4, 5 are filled with the liquid necessary for the synthesis reactions via the inlet channel 49 and the borehole 47. The displaced gas and excess liquid leave the vertically oriented flat space 41 of the reaction cells 2, 3, 4, 5 via the borehole 46 and the outlet channel 48. To empty the reaction cells 2, 3, 4, 5, a suitable gas, for example argon, is supplied under pressure via the outlet channel 48 and the borehole 46, the reaction liquid being able to flow out via the inlet channel 49 rapidly and completely via the borehole 47 in the comer 44. As a result of the particular shape, the filling and emptying can be performed rapidly and reliably under favourable flow conditions without the risk of gas inclusions or dead space.

## Claims

1. A device especially for synthesizing biopolymers such as oligonucleotides on a support material (19) which is suitable for synthesis and lies on a back plate (17), using at least one reaction cell (2, 3, 4, 5) assigned to the support material (19), which reaction cell has, on the side facing the support material (19), an orifice (41, 51) which can be repeatedly sealed against the support material (19) along a preset sweep track, and which can be lifted off again, to generate a two-dimensional array of individual cells and which can be filled with the chemical substances required for the synthesis and emptied again via channels (46 - 49) running through the body of the reaction cell (2-5), said channels for filing and emptying the reaction cell (2-5) each open into the upper (42) and lower (44) round corner of the edge strip (40) of the vertically oriented reaction cell (2-5) wherein the support material (19) is detachably attached so as not to be able to slide as a cut-to-size sheet on the back plate (17), the back plate (17), the support material (19) and the assigned orifice (41) of the reaction cell (2, 3, 4, 5) essentially extend along the vertical plane running in the direction of gravity, the back plate (17) together with the support material (19) is movable stepwise within the vertical plane to generate the intended sweep track and the directions of motion of the reaction cells (2 - 5) for being placed on the support material (19) and for being lifted off the support material (19) lie in a plane which essentially extends horizontally.

2. A device according to claim 1, wherein the vertically oriented back plate (17) is movable in a vertical direction with presettable step widths.

3. A device according to claim 1, wherein the vertically oriented back plate (17) is movable in a horizontal direction.

4. A device according to any one of claims 1 to 3, wherein an elastic layer is provided betwen the back plate (17) and the support material (19).

5. A device according to claim 4, wherein the layer has a thickness between 0.5 and 2 mm.

6. A device according to claim 5, wherein the elastic layer is a rubber film.

7. A device according to any one of claims 1 to 6, wherein the support material (19) is a glass plate, a plastic plate or a plastic film.

8. A device according to any one of the preceding claims, wherein a plurality of reaction cells (2 - 5) are arranged on a shared carrier bar (20).

9. A device according to claim 8, wherein the carrier bar (20) extends transversely to the direction in which the back plate (17) is movable.

10. A device according to claim 8 or 9, wherein the reaction cells (2 - 5) are attached so as to be able to slide against the carrier bar (20) against the force of a pressure spring (32).

11. A device according to any one of the preceding claims, wherein the reaction cells (2-5) have in plan view the shape of a square (40), the diagonals of which extend in each case horizontally and vertically.

12. A device according to any one of claims 1 to 10, wherein the reaction cells (2 - 5) have in plan view the shape of a hexagon in which an upper and a lower funnel-shaped region are formed.

13. A device according to any one of the preceding claims, wherein the bottom of the reaction cell is formed by the planar upper side (39) of a block-like body on which there is a surrounding edge strip (40) to form the side walls of the reaction cell (2 - 5).

14. A device according to claim 13, wherein the course of the edge strip (40) corresponds to a square with rounded comers (42 - 45).

15. A device according to claim 13 or 14, wherein the surrounding edge strip (40) is made trapezoidal in cross-section, the inner leg running at right angles to the plane of the reaction cell and the shorter base line being assigned to the contact surface (51) of the reaction cell (2 - 5).

16. A device according to any one of claims 1 to 15, wherein the device includes means (62) for marking the respective horizontal position of the reaction cell on the support material (19).

17. A process for preparing a support material (19) having an array of biopolymers on its surface, which comprises synthesizing the biopolymers on the support material (19) by means of a device according to one or more of claims 1 to 16.

## Patentansprüche

1. Vorrichtung speziell zum Synthetisieren von Biopolymeren, wie Oligonucleotiden auf einem Trägermaterial (19), das für die Synthese geeignet ist und auf einer Rückplatte (17) liegt, unter Verwendung wenigstens einer Reaktionszelle (2, 3, 4, 5), die dem Trägermaterial (19) zugeordnet ist und auf ihrer dem Trägermaterial (19) zugewandten Seite eine Öffnung (41, 51) aufweist, die an dem Trägermaterial (19) auf einer vorgegebenen Verstellbahn wiederholt verschlossen und davon wieder abgehoben werden kann, um eine zweidimensionale Gruppe einzelner Zellen zu bilden, und die über durch den Körper der Reaktionszelle verlaufende Kanäle (46 - 49) mit den für die Synthese erforderlichen chemischen Substanzen gefüllt und wieder entleert werden können, wobei die Kanäle zum Befüllen und Entleeren der Reaktionszelle (2 - 5) sich jeweils in die obere (42) und untere (44) runde Ecke des Randstreifens (40) der vertikal ausgerichteten Reaktionszelle (2 - 5) öffnen, das Trägermaterial (19) lösbar derart angebracht ist, dass es nicht als eine auf Größe geschnittene Folie auf der Rückplatte (17) gleiten kann, die Rückplatte (17), das Trägermaterial (19) und die zugehörige Öffnung (41) der Reaktionszelle (2, 3, 4, 5) sich im Wesentlichen in der Vertikalebene erstrecken, die in Schwerkraftrichtung verläuft, die Rückplatte (17) zusammen mit dem Trägermaterial (19) schrittweise in der Vertikalebene beweglich ist, um die erwünschte Verstellbahn zu erzeugen, und die Bewegungsrichtungen der Reaktionszellen (2 - 5) zum Aufsetzen auf das Trägermaterial (19) und zum Abheben vom Trägermaterial (19) in einer Ebene liegen, die sich im Wesentlichen horizontal erstreckt.

2. Vorrichtung nach Anspruch 1, bei der die vertikal ausgerichtete Rückplatte (17) in einer vertikalen Richtung mit vorbestimmten Schrittweiten beweglich ist.

3. Vorrichtung nach Anspruch 1, bei der die vertikal ausgerichtete Rückplatte (17) in einer horizontalen Richtung beweglich ist.

4. Vorrichtung nach einem der Ansprüche 1 bis 3, bei der eine elastische Schicht zwischen der Rückplatte (17) und dem Trägermaterial (19) angeordnet ist.

5. Vorrichtung nach Anspruch 4, bei der die Schicht eine Dicke zwischen 0,5 und 2 mm hat.

6. Vorrichtung nach Anspruch 5, bei der die elastische Schicht ein Gummifilm ist.

7. Vorrichtung nach einem der Ansprüche 1 bis 5, bei der das Trägermaterial (19) eine Glasplatte, eine Kunststoffplatte oder ein Kunststofffilm ist.

8. Vorrichtung nach einem der vorhergehenden Ansprüche, bei der mehrere Reaktionszellen (2 - 5) auf einer gemeinsamen Trägerstange (20) angeordnet sind.

9. Vorrichtung nach Anspruch 8, bei der sich die Trägerstange (20) quer zur Richtung erstreckt, in der die Rückplatte (17) beweglich ist.

10. Vorrichtung nach Anspruch 8 oder 9, bei der die Reaktionszellen (2 - 5) so angebracht sind, dass sie gegenüber der Trägerstange (20) gegen die Kraft einer Druckfeder (32) gleiten können.

11. Vorrichtung nach einem der vorhergehenden Ansprüche, bei der die Raktionszellen (2 - 5) in Draufsicht die Gestalt eines Quadrates (40) haben, deren Diagonalen sich in jedem Falle horizontal und vertikal erstrecken.

12. Vorrichtung nach einem der Ansprüche 1 bis 10, bei der die Raktionszellen (2 - 5) in Draufsicht die Gestalt eines Sechsecks haben, in dem ein oberer und ein unterer trichterförmiger Bereich ausgebildet sind.

13. Vorrichtung nach einem der vorhergehenden Ansprüche, bei der der Boden der Reaktionszelle von einer planaren Oberseite (39) eines blockförmigen Körpers gebildet ist, auf dem sich ein umlaufender Randstreifen (40) zur Bildung der Seitenwände der Reaktionszelle (2 - 5) erstreckt.

14. Vorrichtung nach Anspruch 13, bei der der Verlauf des Randstreifens (40) einem Quadrat mit verrundeten Ecken (42 - 45) entspricht.

15. Vorrichtung nach Anspruch 13 oder 14, bei der der umlaufende Randstreifen (40) im Querschnitt trapezförmig ist, wobei der innere Schenkel rechtwinkelig zur Ebene der Reaktionszelle verläuft und die kürzere Grundlinie der Kontaktfläche (51) der Reaktionszelle (2 - 5) zugeordnet ist.

16. Vorrichtung nach einem der Ansprüche 1 bis 15, bei der die Vorrichtung Einrichtungen (62) zum Markieren der jeweiligen Horizontalposition der Reaktionszelle auf dem Trägermaterial (19) enthält.

17. Verfahren zum Vorbereiten eines Trägermaterials (19), auf dessen Oberfläche eine Gruppe Biopolymere angeordnet ist, umfassend die Synthetisierung der Biopolymere auf dem Trägermaterial (19) mittels einer Vorrichtung nach einem oder mehreren der Ansprüche 1 bis 16.

## Revendications

1. Dispositif en particulier pour la synthèse de biopolymères, tels que des oligonucléotides, sur un support (19), approprié pour la synthèse et qui repose sur une plaque arrière (17), utilisant au moins une cellule de réaction (2, 3, 4, 5) fixée au support (19) et présentant, sur son côté faisant face au support (19), un orifice (41, 51) qui peut être appliqué fermement contre le support (19), le long d'une trajectoire de balayage préétablie et en être enlevé afin de produire une rangée bidimensionnelle de cellules individuelles et qui peut être rempli avec les substances chimiques nécessaires à la synthèse et vidé à nouveau via des canaux (46-49) présents sur tout le corps de la cellule de réaction (2-5), lesdits canaux de remplissage et de vidange de la cellule de réaction (2-5) s'ouvrant chacun au niveau du coin arrondi supérieur (42) et inférieur (44) de l'arête (40) de la cellule de réaction orientée verticalement (2-5), **caractérisé en ce que** le support (19) est attaché de manière amovible de façon à ne pas pouvoir glisser sur la plaque arrière (17) comme une feuille découpée, la plaque arrière (17), le support (19) et l'orifice appliqué (41) de la cellule de réaction (2, 3, 4, 5) s'étendant essentiellement le long du plan vertical orienté dans le sens de la pesanteur, la plaque arrière (17) ainsi que le support (19) pouvant être déplacés par paliers dans le plan vertical afin de produire la trajectoire de balayage souhaitée, les directions de mouvement des cellules de réaction (2-5) devant être placées sur le support (19) et être enlevées du support (19) se situant dans un plan essentiellement horizontal.

2. Dispositif selon la revendication 1, **caractérisé en ce que** la plaque arrière (17) orientée verticalement peut être déplacée verticalement selon des largeurs de pas prédéterminées.

3. Dispositif selon la revendication 1, **caractérisé en ce que** la plaque arrière (17) orientée verticalement peut être déplacée horizontalement.

4. Dispositif selon l'une quelconque des revendications 1 à 3, **caractérisé en ce qu'**une couche élastique est prévue entre la plaque arrière (17) et le support (19).

5. Dispositif selon la revendication 4, **caractérisé en ce que** l'épaisseur de la couche élastique est comprise entre 0,5 et 2 mm.

6. Dispositif selon la revendication 5, **caractérisé en ce que** la couche élastique est un film de caoutchouc.

7. Dispositif selon l'une des revendications 1 à 6, **caractérisé en ce que** le support (19) est une plaque de verre, une plaque de plastique ou un film de plastique.

8. Dispositif selon l'une quelconque des revendications précédentes, **caractérisé en ce qu'**une pluralité de cellules de réaction (2 - 5) sont disposées sur la surface d'une barre porteuse (20).

9. Dispositif selon la revendication 8, **caractérisé en ce que** la barre porteuse (20) s'étend transversalement à la direction de déplacement de la plaque arrière (17).

10. Dispositif selon l'une des revendications 8 ou 9, **caractérisé en ce que** les cellules de réaction (2-5) sont fixées de façon à glisser contre la barre porteuse (20) à l'encontre de la force exercée par un ressort (32).

11. Dispositif selon l'une quelconque des revendications précédentes, **caractérisé en ce que** les cellules de réaction (2-5), vues en plan, se présentent sous forme d'un carré (40) dont les diagonales s'étendent à chaque fois horizontalement et verticalement.

12. Dispositif selon l'une des revendications 1 à 10, **caractérisé en ce que** les cellules de réaction (2-5), vues en plan, se présentent sous forme d'un hexagone comportant une région supérieure et une région inférieure en forme d'entonnoir.

13. Dispositif selon l'une quelconque des revendications précédentes, **caractérisé en ce que** le fond de la cellule de réaction est formé par le côté supérieur plat (39) d'un corps en forme de bloc entouré d'une arête (40) formant les parois latérales de la cellule de réaction (2-5).

14. Dispositif selon la revendication 13, **caractérisé en ce que** le pourtour de l'arête (40) correspond à un carré dont les bords sont arrondis (42-45).

15. Dispositif selon la revendication 13 ou 14, **caractérisé en ce que** l'arête (40) est de section trapézoïdale, son tronçon interne formant des angles droits par rapport au plan de la cellule de réaction et sa ligne de base la plus courte étant fixée à la surface de contact (51) de la cellule de réaction (2-5).

16. Dispositif selon l'une quelconque des revendications 1 à 15, **caractérisé en ce qu'**il comprend des moyens (62) permettant de marquer la position horizontale de la cellule de réaction sur le support (19).

17. Procédé de préparation d'un support (19), disposant d'une rangée de biopolymères sur sa surface, **caractérisé en ce qu'**il comprend la synthèse de biopolymères sur le support (19) au moyen d'un dispositif selon une ou plusieurs des revendications 1 à 16.
